# EUROPÄISCHE PATENTSCHRIFT

(11) **EP 4 065 478 B1**
(45) Veröffentlichungstag und Bekanntmachung des Hinweises auf die Patenterteilung: **12.02.2025**
(21) Anmeldenummer: 20799638.0
(22) Anmeldetag: 21.10.2020
(51) Int. Cl.: B65D 5/02, B65D 5/40, B65D 85/72

(54) **PACKUNG MIT GESCHWUNGENEN KANTEN**
CARTON WITH CURVED EDGES
EMBALLAGE À ARÊTES INCURVÉES

(30) Priorität: 29.11.2019 DE 102019132431
(43) Veröffentlichungstag der Anmeldung: 05.10.2022
(73) Patentinhaber: SIG Services AG, 8212 Neuhausen am Rheinfall (CH)
(72) Erfinder: GIEROW, Norman, 40545 Düsseldorf (DE); HAUSER, Philippe, 8200 Schaffhausen (CH); KAYLAN, Ali, 40477 Düsseldorf (DE); KECK, Thomas, 52064 Aachen (DE); KLEIN, Heike, 40547 Düsseldorf (DE); MERGEL, Stefan, 40225 Düsseldorf (DE); SCHULTE, Georg, 47918 Tönisvorst (DE); WIRTZ, Christoph, 52441 Linnich (DE)
(74) Vertreter: Cohausz & Florack
(86) Internationale Anmeldenummer: PCT/EP2020/079569
(87) Internationale Veröffentlichungsnummer: WO 2021/104758

(56) Entgegenhaltungen:
- EP-A1- 3 228 553
- WO-A1-2004/076302
- WO-A1-2009/101029
- WO-A1-2011/154173
- DE-A1- 102006 025 744
- DE-A1- 102016 003 826
- US-S- D 454 063
- US-S- D 454 063
- US-S- D 540 164
- US-S- D 652 316
- US-S- D 676 742
- US-S- D 852 620
- US-S- D 852 620

## Beschreibung

Die Erfindung betrifft eine Packung aus einem Verbundmaterial, umfassend: einen Packungsboden mit zwei vorderen Bodenecken und mit zwei hinteren Bodenecken, einen Packungsgiebel mit zwei vorderen Giebelecken und mit zwei hinteren Giebelecken, und einen Packungsgrundkörper mit einem Frontpanel, einem ersten Seitenpanel, einem zweiten Seitenpanel und einem Rückpanel, wobei der Packungsboden und der Packungsgiebel auf gegenüberliegenden Seiten des Packungsgrundkörpers angeordnet sind, und wobei das Verbundmaterial eine Polymeraußenschicht, eine Polymerinnenschicht und eine faserhaltige Trägerschicht aufweist, die zwischen der Polymeraußenschicht und der Polymerinnenschicht angeordnet ist.

Verpackungen (im gefüllten Zustand: "Packungen") können auf unterschiedliche Weisen und aus verschiedensten Materialien hergestellt werden. Eine weit verbreitete Möglichkeit ihrer Herstellung besteht darin, aus dem Packungsmaterial einen Zuschnitt herzustellen, aus dem durch Falten und weitere Schritte zunächst ein Packungsmantel und schließlich eine Packung entstehen. Alternativ hierzu ist es auch möglich, aus dem Zuschnitt direkt - also ohne den Zwischenschritt des Packungsmantels - eine Packung herzustellen. Diese Herstellungsart hat unter anderem den Vorteil, dass die Zuschnitte und Packungsmäntel sehr flach sind und somit platzsparend gestapelt werden können. Auf diese Weise können die Zuschnitte bzw. Packungsmäntel an einem anderen Ort hergestellt werden als die Faltung und Befüllung der Packungsmäntel erfolgt. Als Material werden häufig Verbundstoffe eingesetzt, beispielsweise ein Verbund aus mehreren dünnen Lagen aus Papier, Pappe, Kunststoff und/oder Metall, insbesondere Aluminium. Derartige Packungen finden insbesondere in der Lebensmittelindustrie große Verbreitung.

Aus dem Stand der Technik sind unterschiedliche Packungen aus Verbundmaterial bekannt. Während derartige Packungen ursprünglich recht einfache geometrische Formen hatten - beispielsweise quaderförmig - werden zunehmend komplexere geometrische Formen angestrebt, um den Kunden optisch ansprechende und funktional vorteilhafte Packungen anbieten zu können. Packungen aus Verbundmaterial mit komplexerer Geometrie sind beispielsweise aus der WO 02/04301 A1, der WO 2011/154173 A1 und der WO 2017/174210 A1 bekannt.

Ein Nachteil des in der WO 02/04301 A1 beschriebenen Verpackungsbehälters liegt in dem Aufbau des Verbundmaterials. Denn in der WO 02/04301 A1 wird nicht beschrieben, dass das Verbundmaterial eine Kunststoffinnenschicht und eine Kunststoffaußenschicht aufweist, insbesondere keine Polymerinnenschicht bzw. Polymeraußenschicht.

Nachteilig an der aus der WO 2011/154173 A1 bekannten Verpackung ist, dass die Kanten im Mantelbereich etwa 90° aufweisen und somit relativ stark geknickt sind. Dies kann zu Beschädigungen des Laminats, insbesondere zu Rissen in der Papier- oder Pappschicht des Laminats führen. Zudem sind die dort gezeigten Verpackungen nur schwer herstellbar, da die Mantelflächen Kanten aufweisen, die entlang ihrer gesamten Länge - also vom Boden bis zum Giebel - gekrümmt sind.

Bei der aus der WO 2017/174210 A1 bekannten Verbundpackung liegt ein Nachteil darin, dass die Vorderseite der Packung ohne Faltlinien bzw. ohne Faltkanten in die Seitenflächen der Packung übergeht, so dass die Vorderseite und die Seitenflächen eine gemeinsame Auswölbung bilden. Der kontinuierliche Übergang von Vorderseite und Seitenflächen verringert zwar die Belastung des Laminats, erschwert jedoch eine definierte Formgebung der Packung und kann zudem zu einer verringerten Steifigkeit des Packungsmantels führen. Ein weiterer Nachteil liegt darin, dass die in der WO 2017/174210 A1 beschriebenen Verbundpackungen nur aufwändig herstellbar sind, da die Rückseite und die Seitenflächen nicht lediglich durch Faltlinien voneinander getrennt sind, sondern zwischen diesen Seiten der Verbundpackung zusätzliche Flächen ("Griffspanele") vorgesehen sind.

Vor diesem Hintergrund liegt der Erfindung die Aufgabe zugrunde, die eingangs beschriebene und zuvor näher erläuterte Packung derart auszugestalten und weiterzubilden, dass die Herstellung von Packungen, insbesondere flüssigkeitsdichten Packungen - mit noch komplexeren Geometrien ohne Beeinträchtigung der Steifigkeit der Packung und ohne erhöhten Herstellungsaufwand ermöglicht wird.

Diese Aufgabe wird bei einer Packung nach dem Oberbegriff von Patentanspruch 1 gelöst durch eine dritte Mantelfaltlinie, die mehrere Abschnitte aufweist, die jeweils an ein Seitenpanel und an das Rückpanel angrenzen, und von denen wenigstens ein Abschnitt gekrümmt ist und wenigstens ein Abschnitt der dritten Mantelfaltlinie gerade ist und/oder wenigstens zwei Abschnitte der dritten Mantelfaltlinie entgegengesetzte Krümmungsrichtungen aufweisen.

Die erfindungsgemäße Packung ist - teilweise oder vollständig - aus einem Verbundmaterial hergestellt. Das flächenförmige Verbundmaterial weist mehrere einander überlagernde und miteinander verbundene Schichten auf und bildet auf diese Weise einen flächenförmigen Verbund. Das flächenförmige Verbundmaterial umfasst eine Polymeraußenschicht, eine Polymerinnenschicht und eine faserhaltige Trägerschicht, die zwischen der Polymeraußenschicht und der Polymerinnenschicht angeordnet ist. Die Polymerinnenschicht und die Polymeraußenschicht verleihen dem Verbundmaterial flüssigkeitsdichte Eigenschaften, da sie aus Kunststoff hergestellt sind. Die faserhaltige Trägerschicht (vorzugsweise: Papier oder Pappe) dient hingegen vor allem dazu, dem Verbundmaterial verbesserte mechanische Eigenschaften zu verleihen, insbesondere eine verbesserte Steifigkeit. Optional kann zudem eine Barriereschicht vorgesehen sein, die ebenfalls zwischen der Polymeraußenschicht und der Polymerinnenschicht angeordnet ist (vorzugsweise zwischen der faserhaltigen Trägerschicht und der Polymerinnenschicht). Die Barriereschicht kann beispielsweise aus Aluminium hergestellt sein und soll verhindern, Licht und/oder Sauerstoff durchzulassen. Die Packung kann zudem eine Vielzahl von Faltkanten aufweisen, die bei der Herstellung der Packung durch Falten des flächenförmigen Verbundmaterials entlang von Faltlinien entstehen. Die Packung umfasst zunächst einen Packungsboden mit zwei vorderen Bodenecken und mit zwei hinteren Bodenecken. Benachbarte Bodenecken sind durch untere Packungskanten miteinander verbunden. Die Packung umfasst zudem einen Packungsgiebel mit zwei vorderen Giebelecken und mit zwei hinteren Giebelecken. Benachbarte Giebelecken sind durch obere Packungskanten miteinander verbunden. Weiterhin umfasst die Packung einen Packungsgrundkörper mit einem Frontpanel, einem ersten Seitenpanel, einem zweiten Seitenpanel und einem Rückpanel. Das Frontpanel ist vorzugsweise gegenüberliegend von dem Rückpanel angeordnet und das erste Seitenpanel ist vorzugsweise gegenüberliegend von dem zweiten Seitenpanel angeordnet. Der Packungsboden und der Packungsgiebel sind auf gegenüberliegenden Seiten des Packungsgrundkörpers angeordnet; bei einer auf dem Packungsboden stehenden Packung ist der Packungsboden unterhalb des Packungsgrundkörpers angeordnet und der Packungsgiebel ist oberhalb des Packungsgrundkörpers angeordnet.

Erfindungsgemäß ist eine dritte Mantelfaltlinie vorgesehen, die mehrere Abschnitte aufweist, die jeweils an ein Seitenpanel und an das Rückpanel angrenzen, und von denen wenigstens ein Abschnitt gekrümmt ist und von denen wenigstens ein Abschnitt gerade ist. Nach einer Ausgestaltung der Packung kann vorgesehen sein, dass die dritte Mantelfaltlinie mehrere Abschnitte aufweist, die jeweils an ein Seitenpanel und an das Rückpanel angrenzen, und von denen wenigstens ein Abschnitt gerade ist. Indem zwischen dem Seitenpanel und dem daran angrenzenden Rückpanel eine Faltlinie vorgesehen ist, wird eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen zu erzeugen, wodurch Luftspalte zwischen benachbarten Packungen entstehen, die die Luftzirkulation verbessern. Wenn bei der dritten Mantelfaltlinie neben gekrümmten Abschnitten auch gerade Abschnitte vorgesehen sind, wird die Herstellung der Packung erleichtert. Es kann vorgesehen sein, dass zwischen beiden Seitenpanels und dem daran angrenzenden Rückpanel jeweils eine dritte Mantelfaltlinie vorgesehen ist, die mehrere Abschnitte aufweist, die jeweils an ein Seitenpanel und an das Rückpanel angrenzen, und von denen wenigstens ein Abschnitt gekrümmt ist und von denen wenigstens ein Abschnitt gerade ist. Weiterhin kann vorgesehen sein, dass die dritte Mantelfaltlinie wenigstens zwei Krümmungen aufweist, die in unterschiedliche Richtungen gerichtet sind, also beispielsweise eine erste Krümmung in Richtung der Seitenfläche und eine zweite Krümmung in Richtung der daran angrenzenden hinteren Fläche ("geschwungene Kante"). Dies hat eine weitere Verbesserung der Luftzirkulation zwischen benachbarten Packungen zur Folge.

Nach einer Ausgestaltung der Packung ist vorgesehen, dass die dritte Mantelfaltlinie mit einem ihrer beiden Enden an einer der beiden hinteren Giebelecken endet und mit ihrem anderen Ende an einer der beiden hinteren Bodenecken endet. Indem die dritte Mantelfaltlinie mit beiden Enden an einer Giebelecke bzw. Bodenecke endet oder an diese angrenzt, wird eine erhöhte Steifigkeit dieser Ecken der Packung erreicht.

Nach einer weiteren Ausgestaltung der Packung ist vorgesehen, dass der an den Packungsboden angrenzende Abschnitt und der an den Packungsgiebel angrenzende Abschnitt der dritten Mantelfaltlinie gerade sind. Der Einsatz gerader Abschnitte ist angrenzend an den Packungsboden und angrenzend an den Packungsgiebel besonders vorteilhaft, da auf diese Weise die Verwendung einfacherer Werkzeuge zur Herstellung der Böden und Giebel der Packungen möglich ist.

Gemäß einer weiteren Ausbildung der Packung ist vorgesehen, dass wenigstens zwei Abschnitte der dritten Mantelfaltlinie entgegengesetzte Krümmungsrichtungen aufweisen. Insbesondere kann vorgesehen sein, dass ein Abschnitt in Richtung des Rückpanels gekrümmt ist und dass ein Abschnitt in Richtung des Seitenpanels gekrümmt ist. Auf diese Weise kann eine Packung erreicht werden, die sowohl konvexe als auch konkave Flächen bzw. Panels aufweist. Vorzugsweise ist der in Richtung des Seitenpanels gekrümmte Abschnitt der dritten Mantelfaltlinie oberhalb von dem in Richtung des Rückpanels gekrümmten Abschnitt der dritten Mantelfaltlinie angeordnet. Dies führt im oberen Bereich - insbesondere in der oberen Hälfte - der Packung zu einer breiten, konkaven Rückseite der Packung. Da die Packungen vorzugsweise in ihrem oberen Bereich - insbesondere in der oberen Hälfte - eine schmale, konvexe Vorderseite aufweisen, können mehrere Packungen platzsparend vor- bzw. hintereinander gestellt werden, so dass eine gute Platzausnutzung erreicht wird. Zudem kann durch entgegengesetzte Krümmungsrichtungen erreicht werden, dass das durch die eine Krümmungsrichtung verringerte Füllvolumen durch die andere Krümmungsrichtung wieder ausgeglichen wird, so dass die Packungshöhe für ein gegebenes Packungsvolumen unverändert bleiben kann.

Nach einer Ausgestaltung der Packung ist vorgesehen, dass der Packungsgrundkörper wenigstens ein Entlastungspanel aufweist, das zwischen dem Frontpanel und einem der beiden Seitenpanels angeordnet ist. Das Entlastungspanel dient dazu, einen möglichst fließenden Übergang zwischen dem Frontpanel und dem Seitenpanel herzustellen. Vorzugsweise erstreckt sich das Entlastungspanel über die gesamte Höhe des Packungsgrundkörpers, also von dem Packungsboden bis zu dem Packungsgiebel und trennt daher das Frontpanel von den beiden Seitenpanels. Der technische Effekt des Entlastungspanels liegt darin, dass das Verbundmaterial im Vergleich zu einer 90°-Kante einer quaderförmigen Packung weniger stark gefaltet bzw. geknickt werden braucht, da der Übergang von dem Frontpanel zu den beiden Seitenpanels durch zwei weniger stark geknickte ("stumpfere") Kanten erfolgt. Dies führt zu weniger starken Belastungen des Verbundmaterials und insbesondere zu einer geringeren Gefahr von gerissenen bzw. gebrochenen Fasern in der faserhaltigen Trägerschicht (Papier- oder Pappschicht) des Verbundmaterials. Vorzugsweise weist die Packung zwei Entlastungspanels auf, die zwischen dem Frontpanel und jeweils einem der beiden Seitenpanels angeordnet sind. Durch die Entlastungspanels wird zudem erreicht, dass zwischen nebeneinander angeordneten Packungen - im Gegensatz zu quaderförmigen Packungen - im Bereich der Entlastungspanels ein Spalt bzw. Freiraum zwischen benachbarten Packungen entsteht, durch den Luft zirkulieren kann. Dies hat den Vorteil einer verringerten Gefahr von Schimmelbildung infolge von Feuchtigkeit. Ein weiterer Vorteil von Entlastungspanels kann darin gesehen werden, dass die an die Entlastungspanels angrenzenden Panels bzw. Flächen schmaler und somit stabiler ausgebildet werden können, wodurch eine erhöhte Griffsteifigkeit beim Ausgießen der gefüllten Packung erreicht werden kann.

Nach einer Ausgestaltung der Packung ist vorgesehen, dass das Entlastungspanel und das Frontpanel an dieselbe Kante der Packung angrenzen, insbesondere an eine Kante des Packungsbodens. Insbesondere kann vorgesehen sein, dass das Entlastungspanel und das Frontpanel gemeinsam an die untere vordere Packungskante angrenzen. Nach einer weiteren Ausgestaltung der Packung ist vorgesehen, dass das Entlastungspanel und eines der beiden Seitenpanels an dieselbe Kante der Packung angrenzen, insbesondere an eine Kante des Packungsgiebels. Insbesondere kann vorgesehen sein, dass das Entlastungspanel und eines der beiden Seitenpanels gemeinsam an eine obere seitliche Packungskante angrenzen. Diese Ausgestaltung hat vorzugsweise zur Folge, dass das Entlastungspanel und das daran angrenzende Frontpanel und/oder Seitenpanel (außer im Bereich der Bodenkante bzw. der Giebelkante, an der die Panels zusammenlaufen) winklig zueinander verlaufen. Mit anderen Worten ist das Entlastungspanel in seinem unteren Bereich dem Frontpanel der Packung zuzuordnen, während es in seinem oberen Bereich dem Seitenpanel der Packung zuzuordnen ist. Das Entlastungspanel "windet" sich daher vollständig um eine (gedachte) vertikal verlaufende Kante der Packung herum. Diese Gestaltung der Entlastungspanels hat den Vorteil, dass die bereits zuvor beschriebenen technischen Effekte (verringerte Belastung des Verbundmaterials, verbesserte Luftzirkulation) nicht nur an einer Seite der Packung, sondern an zwei Seiten der Packung auftreten.

Nach einer weiteren Ausbildung der Packung wird vorgeschlagen, dass zwischen wenigstens einem Entlastungspanel und dem daran angrenzenden Frontpanel eine erste Mantelfaltlinie vorgesehen ist, die vorzugsweise wenigstens abschnittsweise gekrümmt ist. Indem zwischen dem Entlastungspanel und dem Frontpanel eine Faltlinie vorgesehen ist, wird eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen bzw. Panels zu erzeugen, wodurch Luftspalte zwischen benachbarten Packungen entstehen, die die Luftzirkulation verbessern. Es kann vorgesehen sein, dass zwischen beiden Entlastungspanels und dem daran angrenzenden Frontpanel jeweils eine erste Mantelfaltlinie vorgesehen ist, die vorzugsweise wenigstens abschnittsweise gekrümmt ist. Es kann zudem vorgesehen sein, dass die erste Mantelfaltlinie durchgehend gekrümmt verläuft.

Zu dieser Ausbildung wird weiter vorgeschlagen, dass die erste Mantelfaltlinie nur mit einem ihrer beiden Enden an einer der beiden vorderen Giebelecken oder an einer der beiden vorderen Bodenecken endet und mit ihrem anderen Ende nicht an einer Giebelecke oder an einer Bodenecke endet. Indem die erste Mantelfaltlinie an einem ihrer Enden an einer der beiden vorderen Giebelecken oder an einer der beiden vorderen Bodenecken endet oder an diese angrenzt, wird eine erhöhte Steifigkeit dieser Ecken der Packung erreicht. Indem das andere Ende der ersten Mantelfaltlinie nicht an einer Packungsecke endet und auch nicht an diese angrenzt, ist es hingegen möglich, einen sanften und möglichst ebenen Übergang zwischen den beiden durch die erste Mantelfaltlinie getrennten Flächen bzw. Panels zu erreichen. Beispielsweise kann vorgesehen sein, dass das andere Ende der ersten Mantelfaltlinie an einer Packungskante endet oder an diese angrenzt, wodurch die beiden von der ersten Mantelfaltlinie getrennten und auf die Packungskante zulaufenden Flächen bzw. Panels jedenfalls abschnittsweise etwa in einer Ebene liegen können.

Nach einer weiteren Ausbildung der Packung ist vorgesehen, dass zwischen wenigstens einem Entlastungspanel und dem daran angrenzenden Seitenpanel eine zweite Mantelfaltlinie vorgesehen ist, die vorzugsweise wenigstens abschnittsweise gekrümmt ist. Wie bereits zuvor im Zusammenhang mit der ersten Mantelfaltlinie erläutert wurde, wird auch durch die zweite Mantelfaltlinie eine Faltkante mit einem definierten Verlauf erreicht, was die Herstellung der Packung erleichtert. Die Faltkante verbessert zudem im Vergleich zu einer kantenfrei gekrümmten Form die strukturellen Eigenschaften der Packung, insbesondere die Steifigkeit. Durch den gekrümmten Verlauf der Mantelfaltlinie ist es außerdem einfacher möglich, konvexe oder konkave Flächen bzw. Panels zu erzeugen, wodurch Luftspalte zwischen benachbarten Packungen entstehen, die die Luftzirkulation verbessern. Es kann vorgesehen sein, dass zwischen beiden Entlastungspanels und den daran angrenzenden Seitenpanels jeweils eine zweite Mantelfaltlinie vorgesehen ist, die vorzugsweise wenigstens abschnittsweise gekrümmt ist. Es kann zudem vorgesehen sein, dass die zweite Mantelfaltlinie durchgehend gekrümmt verläuft.

Zu dieser Ausbildung wird weiter vorgeschlagen, dass die zweite Mantelfaltlinie nur mit einem ihrer beiden Enden an einer der beiden vorderen Giebelecken oder an einer der beiden vorderen Bodenecken endet und mit ihrem anderen Ende nicht an einer Giebelecke oder an einer Bodenecke endet. Wie bereits zuvor für die erste Mantelfaltlinie beschrieben wurde, kann eine erhöhte Steifigkeit der Packungsecken erreicht werden, wenn ein Ende der zweiten Mantelfaltlinie in dieser Ecke endet oder an diese Ecke angrenzt. Indem das andere Ende der zweiten Mantelfaltlinie nicht an einer Packungsecke endet und auch nicht an diese angrenzt, ist es hingegen möglich, einen sanften und möglichst ebenen Übergang zwischen den beiden durch die zweite Mantelfaltlinie getrennten Flächen bzw. Panels zu erreichen. Beispielsweise kann vorgesehen sein, dass das andere Ende der zweiten Mantelfaltlinie an einer Packungskante endet oder an diese angrenzt, wodurch die beiden von der zweiten Mantelfaltlinie getrennten und auf die Packungskante zulaufenden Flächen bzw. Panels jedenfalls abschnittsweise etwa in einer Ebene liegen können.

Nach einer weiteren Ausgestaltung der Packung ist vorgesehen, dass die Packung im Bereich des Packungsgiebels eine Flossennaht aufweist, die in Richtung des Frontpanels umgelegt ist. Diese Gestaltung ermöglicht bei einem nach vorne abfallenden Schräggiebel beispielsweise ein besseres Ablaufen von Feuchtigkeit von dem Packungsgiebel, da sich keine nach oben offene "Tasche" bildet, in der sich Feuchtigkeit sammeln könnte. Ebenso kann durch diese Ausgestaltung mehr Platz für einen von Innen eingesiegelten Ausgießer erreicht werden.

Gemäß einer weiteren Ausbildung der Packung ist vorgesehen, dass der Packungsgiebel etwa trapezförmig ist. Die Trapezform des Packungsgiebels hat den Vorteil, dass eine der beiden parallelen Seiten bzw. Kanten (vorzugsweise die vordere Kante des Packungsgiebels) kürzer ist als die gegenüberliegende Seite bzw. Kante (vorzugsweise die hintere Kante des Packungsgiebels) - im Gegensatz zu einer Raute, bei der die gegenüberliegenden Seiten gleich lang sind. Dies ermöglicht es, auch Packungen mit größerem Volumen von der Vorderseite einfach mit einer Hand greifen zu können.

Eine weitere Ausgestaltung der Packung sieht vor, dass der Packungsgiebel ein Schräggiebel ist. Insbesondere kann vorgesehen sein, dass der Packungsgiebel nach vorne abfällt, also im Bereich der Vorderseite der Packung niedriger ist als im Bereich der Rückseite der Packung. Durch den schrägen Verlauf des Packungsgiebels kann erreicht werden, dass ein im Bereich des Packungsgiebels angeordnetes Ausgießelement die Stapelung von Packungen weniger beeinträchtigt als bei Packungen mit ebenem Packungsgiebel. Dies liegt darin begründet, dass das Ausgießelement bei Packungen mit schrägem Giebel - anders als bei Packungen mit ebenem Giebel - nicht zwangsläufig den höchsten Punkt der Packung bildet. Zudem kann ein besseres Ablaufen von Feuchtigkeit von dem Packungsgiebel erreicht werden.

Gemäß einer weiteren Ausgestaltung der Packung ist vorgesehen, dass der Packungsgiebel eine an das Frontpanel angrenzende Vorderkante aufweist, die gekrümmt ist. Vorzugsweise ist die Vorderkante des Packungsgiebels in Richtung des Frontpanels gekrümmt. Auf diese Weise kann die Fläche des Packungsgiebels vergrößert werden, was beispielsweise die Anbringung von Ausgießelementen mit größerem Durchmesser erleichtert. Eine gekrümmte Vorderkante des Packungsgiebels beeinflusst auch die Form des Frontpanels der Packung. Insbesondere lässt sich durch eine in Richtung des Frontpanels gekrümmte Vorderkante ein nach außen gewölbtes (konvexe) Frontpanel der Packung erreichen. Auch dies hat neben einer ansprechenden Optik den bereits zuvor beschriebenen technischen Vorteil einer verbesserten Luftzirkulation zwischen benachbart angeordneten Packungen, was die Gefahr von Schimmelbildung verringert.

Nach einer weiteren Ausbildung der Packung ist vorgesehen, dass das Frontpanel konvex geformt ist und/oder das Rückpanel wenigstens teilweise konkav geformt ist. Insbesondere kann vorgesehen sein, dass die Packung in dem oberen Bereich - insbesondere in der oberen Hälfte - im Bereich des Frontpanels konvex geformt ist und/oder in dem oberen Bereich - insbesondere in der oberen Hälfte - im Bereich des Rückpanels konkav geformt ist. Durch die Kombination aus konvexer Vorderseite und konkaver Rückseite können die Packungen trotz optisch aufwendiger Gestaltung platzsparend vor- oder hintereinander angeordnet werden.

Zu dieser Ausgestaltung wird weiter vorgeschlagen, dass das Frontpanel oberhalb der halben Höhe des Packungsgrundkörpers seine maximale konvexe Auswölbung aufweist. Indem das Frontpanel im oberen Bereich besonders weit nach außen bzw. nach vorne ausgewölbt ist, kann das Frontpanel im oberen Bereich besonders schmal ausgebildet werden, ohne dass das Volumen der Packung gegenüber einer quaderförmigen Packung verringert ist; die Auswölbung nach vorne gleich also die seitliche Verschlankung aus. Durch die seitliche Verschlankung kann die Packung von vorne einfach gegriffen werden, beispielsweise, um sie mit einer Hand aus einem Verkaufsregal zu entnehmen.

Nach einer weiteren Ausbildung der Packung ist vorgesehen, dass die beiden vorderen Giebelecken zwei große Giebeleckwinkel aufweisen, die jeweils größer sind als 90°. Alternativ oder zusätzlich hierzu kann vorgesehen sein, dass die beiden hinteren Giebelecken zwei kleine Giebeleckwinkel aufweisen, die jeweils kleiner sind als 90°. Durch Winkel, die ungleich 90° sind, wird ein Packungsgiebel erreicht, dessen Form von einer rechteckigen oder quadratischen Form abweicht. Ein viereckiger Packungsgiebel mit zwei kleinen (<90°) und zwei großen (>90°) Giebeleckwinkeln kann beispielsweise durch ein Trapez, ein Parallelogramm oder durch eine Raute erreicht werden. Auf diese Weise ist es möglich, ein Packungsgiebel mit unterschiedliche langen Kanten zu erreichen, wodurch beispielsweise eine kurze Vorderkante erreicht werden kann, durch welche die Packung besonders einfach von vorne gegriffen werden kann.

Gemäß einer weiteren Ausgestaltung der Packung ist schließlich vorgesehen, dass die vier Giebeleckwinkel eine Winkelsumme aufweisen, die größer ist als 360°. Eine Winkelsumme, die von 360° abweicht, kann beispielsweise dadurch erreicht werden, dass eine oder mehrere Seiten bzw. Kanten des viereckigen Packungsgiebels nicht gerade, sondern gekrümmt verlaufen (wie dies beispielsweise bei einem Bogenvieleck bzw. Bogenpolygon der Fall ist). Eine Winkelsumme, die größer ist als 360° kann dadurch erreicht werden, dass wenigstens eine Seite bzw. Kante des viereckigen Packungsgiebels nach außen gekrümmt ist. Die Bodeneckwinkel betragen hingegen vorzugsweise 90°, so dass sich ein rechteckiger, insbesondere quadratischer Packungsboden ergibt. Diese Gestaltung des Packungsgiebels hat mehrere Vorteile. Neben einer optisch ansprechenderen Form wird der technische Effekt erreicht, dass Packungen einfacher mit einer Hand gegriffen werden können, da eine Kante des Packungsgiebels (vorzugsweise die vordere Kante) kürzer ist als die anderen Kanten (insbesondere die hintere Kante), so dass die Packung an der Vorderseite schmaler ist. Diese Gestaltung führt zudem zu dem technischen Effekt, dass die Berührungsfläche zwischen nebeneinander angeordneten Packungen (z.B. beim Transport oder im Verkaufsregal) geringer ist als bei quaderförmigen Packungen, deren Seitenpanels sich fast vollständig berühren. Mit anderen Worten bleibt zwischen nebeneinander angeordneten Packungen ein Spalt bzw. Freiraum, durch den Luft zirkulieren kann. Dies hat den Vorteil einer verringerten Gefahr von Schimmelbildung infolge von Feuchtigkeit. Indem die Winkelsumme größer ist als 360° wird zudem erreicht, dass mehr Platz für ein Ausgießelement vorhanden ist. Vorzugsweise weist der viereckige Packungsgiebel eine Winkelsumme wenigstens 370°, insbesondere von wenigstens 380°, bevorzugt von wenigstens 390° auf. Als vorteilhaft haben sich Winkelsummen im Bereich zwischen 390° und 410° herausgestellt.

Die Erfindung wird nachfolgend anhand einer lediglich ein bevorzugtes Ausführungsbeispiel darstellenden Zeichnung näher erläutert. In der Zeichnung zeigen:
- Fig. 1A:: eine erfindungsgemäße Packung in perspektivischer Ansicht,
- Fig. 1B:: die Packung aus Fig. 1A in einer Vorderansicht,
- Fig. 1C:: die Packung aus Fig. 1A in einer Rückansicht,
- Fig. 1D:: die Packung aus Fig. 1A in einer Seitenansicht,
- Fig. 2A:: einen ersten Bereich der Packung aus Fig. 1A in vergrößerter Ansicht, und
- Fig. 2B:: einen zweiten Bereich der Packung aus Fig. 1A in vergrößerter Ansicht.

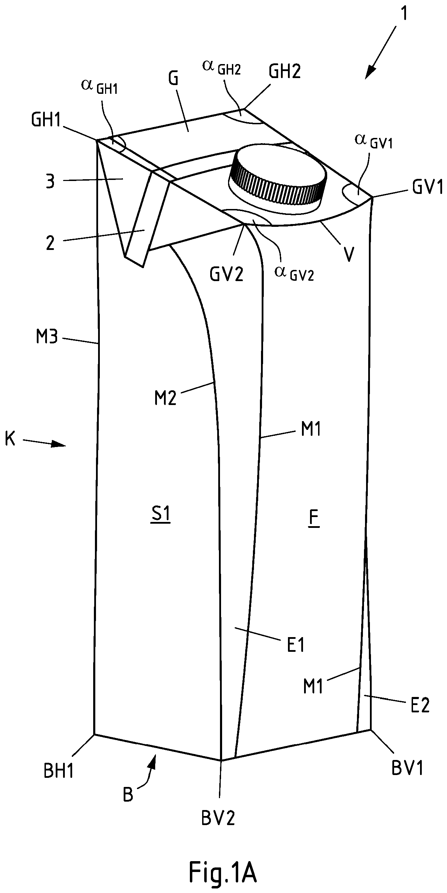

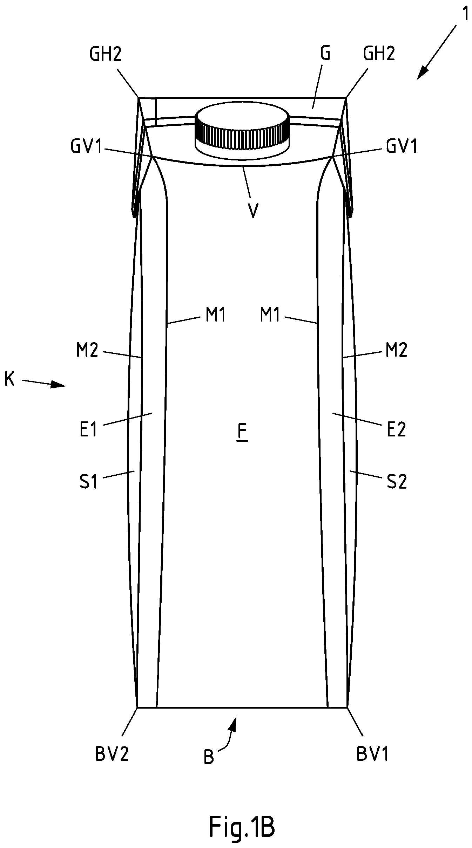

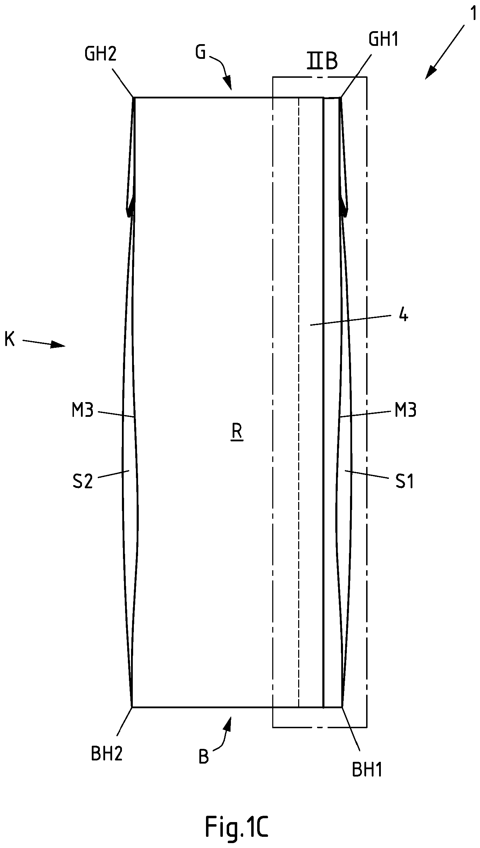

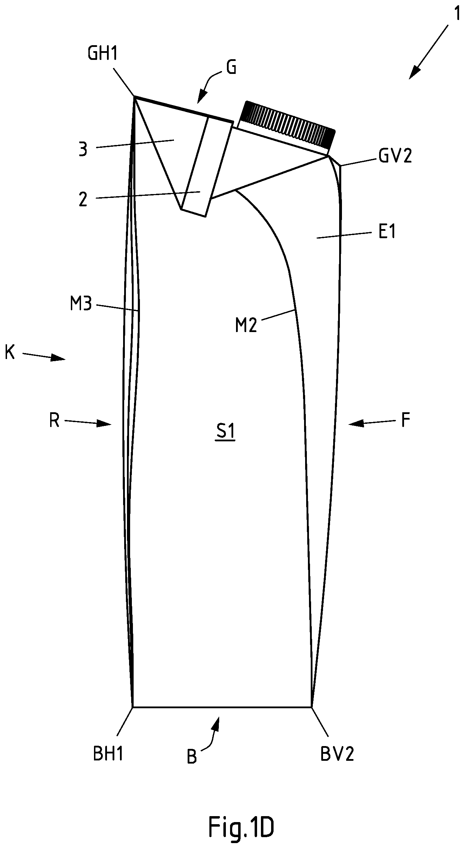

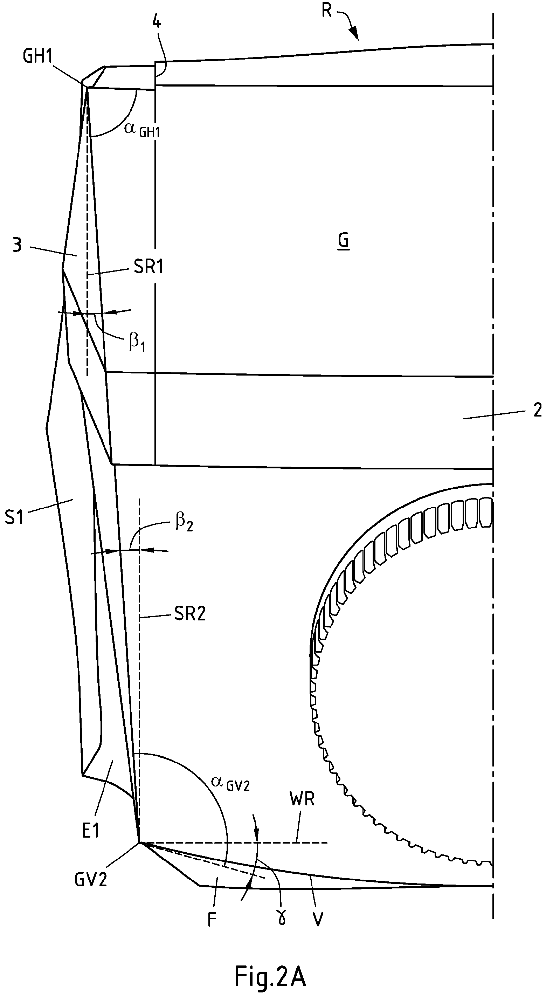

Fig. 1A zeigt eine erfindungsgemäße Packung 1 in perspektivischer Ansicht. Fig. 1B zeigt die Packung 1 aus Fig. 1A in einer Vorderansicht, Fig. 1C in einer Rückansicht und Fig. 1D in einer Seitenansicht. Die Packung 1 weist einen viereckigen Packungsboden B auf, der zwei vordere Bodenecken BV1, BV2 und zwei hinteren Bodenecken BH1, BH2 hat. Die Packung 1 weist zudem einen viereckigen Packungsgiebel G auf, der zwei vordere Giebelecken GV1, GV2 und zwei hintere Giebelecken GH1, GH2 hat. Zudem weist die Packung 1 einen Packungsgrundkörper K auf, der ein Frontpanel F, ein erstes Seitenpanel S1, ein zweites Seitenpanel S2 und ein Rückpanel R umfasst. Der Packungsgrundkörper K ist zwischen dem Packungsboden B und dem Packungsgiebel G angeordnet, so dass der Packungsboden B und der Packungsgiebel G auf gegenüberliegenden Seiten des Packungsgrundkörpers K angeordnet sind und eine Mantelfläche der Packung 1 bilden. Die Packung 1 ist teilweise oder vollständig aus einem Verbundmaterial hergestellt, welches eine Polymeraußenschicht, eine Polymerinnenschicht und eine faserhaltige Trägerschicht aufweist, die zwischen der Polymeraußenschicht und der Polymerinnenschicht angeordnet ist. Bei der faserhaltigen Trägerschicht kann es sich beispielsweise um eine Schicht aus Papier oder Pappe handeln. Im Bereich des Packungsgiebels G weist die Packung 1 eine Flossennaht 2 auf, die in Richtung des Frontpanels F umgelegt ist. Die Packung 1 weist im Bereich des Packungsgiebels G zudem zwei Ohren 3 auf, von denen ein Ohr 3 an das erste Seitenpanel S1 angelegt ist und von denen das zweite Ohr 3 an das zweite Seitenpanel S2 angelegt ist. Im Bereich des Rückpanels R weist die Packung 1 eine Längsnaht 4 auf. Der Packungsgiebel G ist etwa trapezförmig und als Schräggiebel (wie ein Pultdach) ausgebildet. Der Packungsgiebel G weist eine an das Frontpanel F angrenzende Vorderkante V auf, die in Richtung des Frontpanels F gekrümmt ist. Auf die Form des Packungsgiebels wird im Zusammenhang mit Fig. 2A genauer eingegangen.

Der Packungsgrundkörper K der in Fig. 1A bis Fig. 1D gezeigten Packung 1 weist zwei Entlastungspanels E1, E2 auf, von denen das erste Entlastungspanel E1 zwischen dem Frontpanel F und dem ersten Seitenpanel S1 angeordnet ist, und von denen das zweite Entlastungspanel E2 zwischen dem Frontpanel F und dem zweiten Seitenpanel S2 angeordnet ist. Die Entlastungspanels E1, E2 trennen daher das Frontpanel F von den beiden Seitenpanels S1, S2 und bilden einen Übergang zwischen dem Frontpanel F und den beiden Seitenpanels S1, S2. Das erste Entlastungspanel E1 und das zweite Entlastungspanel E2 liegen in dem an den Packungsboden B angrenzenden Bereich mit dem Frontpanel F abschnittsweise in einer Ebene. Das erste Entlastungspanel E1 liegt jedoch in dem an den Packungsgiebel G angrenzenden Bereich mit dem ersten Seitenpanel S1 abschnittsweise in einer Ebene; ebenso liegt das zweite Entlastungspanel E2 in dem an den Packungsgiebel G angrenzenden Bereich mit dem zweiten Seitenpanel S2 abschnittsweise in einer Ebene. Die beiden Entlastungspanels E1, E2 sind daher in ihren unteren Bereichen einer anderen Seite der Packung 1 zugeordnet als in ihren oberen Bereichen; die beiden Entlastungspanels E1, E2 "winden" sich daher um eine gedachte Packungskante herum von dem Frontpanel F in Richtung eines der beiden Seitenpanels S1, S2.

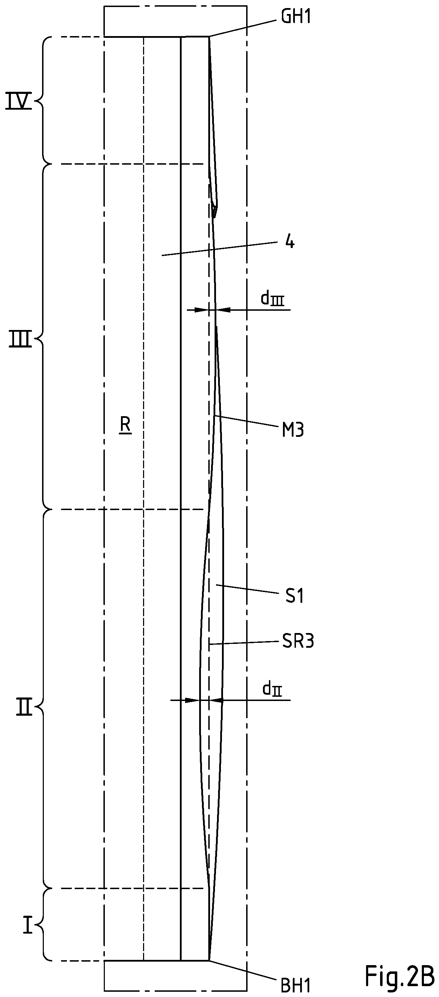

Bei der in Fig. 1A bis Fig. 1D gezeigten Packung 1 ist zwischen dem Frontpanel F und dem ersten Entlastungspanel E1 eine erste Mantelfaltlinie M1 vorgesehen, die durchgehend gekrümmt ist. Ebenso ist zwischen dem Frontpanel F und dem zweiten Entlastungspanel E2 eine erste Mantelfaltlinie M1 vorgesehen, die durchgehend gekrümmt ist. Die beiden ersten Mantelfaltlinien M1 grenzen mit ihren oberen Enden an die beiden vorderen Giebelecken GV1, GV2 an. Mit ihren beiden unteren Enden grenzen die beiden ersten Mantelfaltlinien M1 jedoch nicht an die beiden vorderen Bodenecken BV1, BV2 an, sondern an dazwischen liegende Stellen der unteren vorderen Packungskante. Bei der Packung 1 ist zudem zwischen dem ersten Entlastungspanel E1 und dem daran angrenzenden ersten Seitenpanel S1 eine zweite Mantelfaltlinie M2 vorgesehen, die durchgehend gekrümmt ist. Ebenso ist zwischen dem zweiten Entlastungspanel E2 und dem daran angrenzenden zweiten Seitenpanel S2 eine zweite Mantelfaltlinie M2 vorgesehen, die durchgehend gekrümmt ist. Die beiden zweiten Mantelfaltlinien M2 grenzen mit ihren unteren Enden an die beiden vorderen Bodenecken BV1, BV2 an. Mit ihren beiden oberen Enden grenzen die beiden zweiten Mantelfaltlinien M1 jedoch nicht an die beiden vorderen Giebelecken GV1, GV2 an, sondern an zwischen den vorderen Giebelecken GV1, GV2 und den hinteren Giebelecken GH1, GH1 liegenden Stellen der oberen seitlichen Packungskanten. Bei der in Fig. 1A bis Fig. 1D gezeigten Packung 1 ist zwischen dem ersten Seitenpanel S1 und dem daran angrenzenden Rückpanel R eine dritte Mantelfaltlinie M3 vorgesehen. Ebenso ist zwischen dem zweiten Seitenpanel S1 und dem daran angrenzenden Rückpanel R eine dritte Mantelfaltlinie M3 vorgesehen. Die dritte Mantelfaltlinie M3 grenzt mit ihrem einen Ende an eine der beiden hinteren Giebelecken GH1, GH2 und grenzt mit ihrem anderen Ende an eine der beiden hinteren Bodenecken BH1, BH2 an. Auf den genauen Verlauf der dritten Mantelfaltlinie M3 wird im Zusammenhang mit Fig. 2B näher eingegangen.

In der Seitenansicht (Fig. 1D) ist besonders deutlich erkennbar, dass das Frontpanel F konvex geformt ist, also nach außen gewölbt ist. Die maximale konvexe Auswölbung weist das Frontpanel F oberhalb der halben Höhe des Packungsgrundkörpers K auf. Ebenso ist in Fig. 1D erkennbar, dass das Rückpanel R konkav geformt ist, also nach innen gewölbt ist.

Fig. 2A zeigt einen ersten Bereich der Packung 1 aus Fig. 1A in vergrößerter Ansicht. Die bereits im Zusammenhang mit Fig. 1A bis Fig. 1D beschriebenen Bereiche der Packung 1 sind in Fig. 2A mit entsprechenden Bezugszeichen versehen. Der erste - in Fig. 2A dargestellte - Bereich der Packung betrifft den Bereich des Packungsgiebels G, insbesondere den Bereich des vorderen Giebelwinkels GV2 (sowie des dortigen Giebeleckwinkels α_{GV2}) und den Bereich des hinteren Giebelwinkels GH1 (sowie des dortigen Giebeleckwinkels α_{GH1}). Für die andere (in Fig. 2A nicht dargestellte) Hälfte des Packungsgiebels G gilt aufgrund von Symmetrie Entsprechendes. Die vier Ecken des Packungsgiebels G sind nicht rechtwinklig: Die beiden vorderen Giebelecken GV1, GV2 haben vordere Giebeleckwinkel α_{GV1}, α_{GV2}, die etwas größer sind als 90° (α_{GV1}, α_{GV2} > 90°) und die beiden hinteren Giebelecken GH1, GH2 haben hintere Giebeleckwinkel α_{GH1}, α_{GH2}, die etwas kleiner sind als 90° (α_{GH1}, α_{GH2} < 90°). Für die hinteren Giebeleckwinkel α_{GH1}, α_{GH2} liegt die Abweichung von einem rechten Winkel darin begründet, dass die an die hinteren Giebeleckwinkel α_{GH1}, α_{GH2} angrenzenden oberen seitlichen Packungskanten nicht rechtwinklig zur oberen hinteren Packungskante verlaufen, sondern um einen Winkel β₁ gegenüber einer Senkrechten SR1 geneigt sind (α_{GH1} = α_{GH2} = 90°- β₁). Für die vorderen Giebeleckwinkel α_{GV1}, α_{GV2} hat die Abweichung von einem rechten Winkel zwei Gründe: Erstens verlaufen die an die vorderen Giebeleckwinkel α_{GV1}, α_{GV2} angrenzenden oberen seitlichen Packungskanten nicht rechtwinklig zur hinteren Packungskante, sondern um einen Winkel β₂ gegenüber einer Senkrechten SR2 geneigt. Zweitens verläuft die ebenfalls an die vorderen Giebeleckwinkel α_{GV1}, α_{GV2} angrenzende Vorderkante V nicht gerade, sondern in Richtung des Frontpanels F gekrümmt, wobei die Vorderkante V (bzw. eine Tangente, die die Vorderkante V im Bereich der vorderen Giebelecken GV1, GV2 bzw. der dortigen Giebeleckwinkel α_{GV1}, α_{GV2} berührt) um einen Winkel γ gegenüber einer Waagerechten WR (die parallel zur oberen hinteren Packungskante verläuft) geneigt ist (α_{GV1} = α_{GV2} = 90° + β₂ + y). Der Winkel β₁ entspricht dem Winkel β₂; beide Winkel liegen vorzugsweise im Bereich zwischen 2° und 6°. Die beiden hinteren Giebeleckwinkel α_{GH1}, α_{GH2} können daher beispielsweise im Bereich von etwa 86° liegen. Der Winkel γ liegt vorzugsweise im Bereich zwischen 15° und 25°. Die beiden vorderen Giebeleckwinkel α_{GV1}, α_{GV2} können daher beispielsweise im Bereich von etwa 113° liegen. Aus der beschriebenen Gestaltung - insbesondere aus der gekrümmten Vorderkante V - folgt, dass die Winkelsumme des viereckigen Packungsgiebels G größer ist als 360° (α_{GV1} + α_{GV2} + α_{GH1} + α_{GH2} > 360°).

Fig. 2B zeigt einen zweiten Bereich der Packung 1 aus Fig. 1A in vergrößerter Ansicht. Die bereits im Zusammenhang mit Fig. 1A bis Fig. 2A beschriebenen Bereiche der Packung 1 sind in Fig. 2B mit entsprechenden Bezugszeichen versehen. Der zweite - in Fig. 2B dargestellte - Bereich der Packung 1 betrifft den Bereich der dritten Mantelfaltlinie M3, die das Rückpanel R von den beiden Seitenpanels S1, S2 trennt (in Fig. 2B ist nur eine der beiden dritten Mantelfaltlinien M3 dargestellt; für die andere dritte Mantelfaltlinie M3 gilt aufgrund von Symmetrie Entsprechendes). Die zwischen dem Rückpanel R und den daran angrenzenden Seitenpanels S1, S2 angeordnete dritte Mantelfaltlinie M3 weist vier Abschnitte I-IV auf: der erste Abschnitt I grenzt an den Packungsboden B an und verläuft gerade. Der zweite Abschnitt II grenzt an den ersten Abschnitt I an und verläuft gekrümmt (in Richtung des Rückpanels R). Infolge der Krümmung ergibt sich ein maximaler Abstand d_{II} zwischen der dritten Mantelfaltlinie M3 und einer Senkrechten SR3, der im Bereich zwischen 0,5 mm und 2,5 mm liegen kann. Der dritte Abschnitt III grenzt an den zweiten Abschnitt II an und verläuft gekrümmt (in Richtung des ersten Seitenpanels S1). Infolge der Krümmung ergibt sich ein maximaler Abstand d_{III} zwischen der dritten Mantelfaltlinie M3 und der Senkrechten SR3, der im Bereich zwischen 0,5 mm und 2,5 mm liegen kann. Der zweite Abschnitt II und der dritte Abschnitt III weisen daher entgegengesetzte Krümmungen bzw. Krümmungsrichtungen auf. Der vierte Abschnitt IV grenzt an den dritten Abschnitt III und an den Packungsgiebel G an und verläuft gerade. Die dritte Mantelfaltlinie M3 verläuft daher abschnittsweise gerade (in dem an den

Packungsboden B angrenzenden Abschnitt I sowie in dem an den Packungsgiebel G angrenzenden Abschnitt IV) und abschnittsweise gekrümmt (in den beiden "mittleren" Abschnitten II, III).

### Bezugszeichenliste:

- 1:: Packung
- 2:: Flossennaht
- 3:: Ohr
- 4:: Längsnaht
- α_{GV1}, α_{GV2}:: vordere Giebeleckwinkel
- α_{GH1}, α_{GH2}:: hintere Giebeleckwinkel
- β₁, β₂:: Neigungswinkel
- γ:: Neigungswinkel
- B:: Packungsboden
- BV1, BV2:: vordere Bodenecke
- BH1, BH2:: hintere Bodenecke
- d_{II}, d_{III}:: Abstand
- E1, E2:: Entlastungspanel
- F:: Frontpanel
- G:: Packungsgiebel
- GV1, GV2:: vordere Giebelecke
- GH1, GH2:: hintere Giebelecke
- K:: Packungsgrundkörper
- M1:: erste Mantelfaltlinie
- M2:: zweite Mantelfaltlinie
- M3:: dritte Mantelfaltlinie
- R:: Rückpanel
- S1, S1:: Seitenpanel
- SR1, SR2, SR3:: Senkrechte
- V:: Vorderkante (des Packungsgiebels G)
- WR:: Waagerechte
- I, II, III, IV:: Abschnitte (der dritten Mantelfaltlinie M3)

## Patentansprüche

1. Packung (1) aus einem Verbundmaterial, umfassend:
- einen Packungsboden (B) mit zwei vorderen Bodenecken (BV1, BV2) und mit zwei hinteren Bodenecken (BH1, BH2),
- einen Packungsgiebel (G) mit zwei vorderen Giebelecken (GV1, GV2) und mit zwei hinteren Giebelecken (GH1, GH2), und
- einen Packungsgrundkörper (K) mit einem Frontpanel (F), einem ersten Seitenpanel (S1), einem zweiten Seitenpanel (S2) und einem Rückpanel (R),
- wobei der Packungsboden (B) und der Packungsgiebel (G) auf gegenüberliegenden Seiten des Packungsgrundkörpers (K) angeordnet sind,
- wobei das Verbundmaterial eine Polymeraußenschicht, eine Polymerinnenschicht und eine faserhaltige Trägerschicht aufweist, die zwischen der Polymeraußenschicht und der Polymerinnenschicht angeordnet ist, und
- wobei eine dritte Mantelfaltlinie (M3), die mehrere Abschnitte (II, III) aufweist, die jeweils an ein Seitenpanel (S1, S2) und an das Rückpanel (R) angrenzen, von denen wenigstens ein Abschnitt (II, III) gekrümmt ist,
**dadurch gekennzeichnet, dass**
wenigstens ein Abschnitt (I, IV) der dritten Mantelfaltlinie (M3) gerade ist und/oder wenigstens zwei Abschnitte (II, III) der dritten Mantelfaltlinie (M3) entgegengesetzte Krümmungsrichtungen aufweisen.

2. Packung (1) nach Anspruch 1
**dadurch gekennzeichnet, dass**
die dritte Mantelfaltlinie (M3) mit einem ihrer beiden Enden an einer der beiden hinteren Giebelecken (GH1, GH2) endet und mit ihrem anderen Ende an einer der beiden hinteren Bodenecken (BH1, BH2) endet.
GEAENDERTES BLATT

3. Packung (1) nach Anspruch 1 oder 2,
**dadurch gekennzeichnet, dass**
der an den Packungsboden (B) angrenzende Abschnitt (I) und der an den Packungsgiebel (G) angrenzende Abschnitt (IV) der dritten Mantelfaltlinie (M3) gerade sind.

4. Packung (1) nach einem der Ansprüche 1 bis 3,
**dadurch gekennzeichnet, dass**
der Packungsgrundkörper (K) wenigstens ein Entlastungspanel (E1, E2) aufweist, das zwischen dem Frontpanel (F) und einem der beiden Seitenpanels (S1, S2) angeordnet ist.

5. Packung (1) nach Anspruch 4,
**dadurch gekennzeichnet, dass**
dass das Entlastungspanel (E1, E2) und das Frontpanel (F) an dieselbe Kante der Packung (1) angrenzen, insbesondere an eine Kante des Packungsbodens (B).

6. Packung (1) nach Anspruch 4 oder Anspruch 5,
**dadurch gekennzeichnet, dass**
dass das Entlastungspanel (E1, E2) und eines der beiden Seitenpanels (S1, S2) an dieselbe Kante der Packung (1) angrenzen, insbesondere an eine Kante des Packungsgiebels (G).

7. Packung (1) nach einem der Ansprüche 4 bis 6,
**dadurch gekennzeichnet, dass**
zwischen wenigstens einem Entlastungspanel (E1, E2) und dem daran angrenzenden Frontpanel (F) eine erste Mantelfaltlinie (M1) vorgesehen ist, die vorzugsweise wenigstens abschnittsweise gekrümmt ist.

8. Packung (1) nach Anspruch 7,
**dadurch gekennzeichnet, dass**
die erste Mantelfaltlinie (M1) nur mit einem ihrer beiden Enden an einer der beiden vorderen Giebelecken (GV1, GV2) oder an einer der beiden vorderen Bodenecken (BV1, BV2) endet und mit ihrem anderen Ende nicht an einer Giebelecke (GV1, GV2, GH1, GH2) oder an einer Bodenecke (BV1, BV2, BH1, BH2) endet.

9. Packung (1) nach einem der Ansprüche 1 bis 8,
**dadurch gekennzeichnet, dass**
zwischen wenigstens einem Entlastungspanel (E1, E2) und dem daran angrenzenden Seitenpanel (S1, S2) eine zweite Mantelfaltlinie (M2) vorgesehen ist, die vorzugsweise wenigstens abschnittsweise gekrümmt ist.

10. Packung (1) nach Anspruch 9,
**dadurch gekennzeichnet, dass**
die zweite Mantelfaltlinie (M2) nur mit einem ihrer beiden Enden an einer der beiden vorderen Giebelecken (GV1, GV2) oder an einer der beiden vorderen Bodenecken (BV1, BV2) endet und mit ihrem anderen Ende nicht an einer Giebelecke (GV1, GV2, GH1, GH2) oder an einer Bodenecke (BV1, BV2, BH1, BH2) endet.

11. Packung (1) nach einem der Ansprüche 1 bis 10,
**dadurch gekennzeichnet, dass**
die Packung (1) im Bereich des Packungsgiebels (G) eine Flossennaht (2) aufweist, die in Richtung des Frontpanels (F) umgelegt ist.

12. Packung (1) nach einem der Ansprüche 1 bis 11,
**dadurch gekennzeichnet, dass**
der Packungsgiebel (G) etwa trapezförmig ist.

13. Packung (1) nach einem der Ansprüche 1 bis 12,
**dadurch gekennzeichnet, dass**
der Packungsgiebel (G) ein Schräggiebel ist.

14. Packung (1) nach einem der Ansprüche 1 bis 13,
**dadurch gekennzeichnet, dass**
der Packungsgiebel (G) eine an das Frontpanel (F) angrenzende Vorderkante (V) aufweist, die gekrümmt ist.

15. Packung (1) nach einem der Ansprüche 1 bis 14,
**dadurch gekennzeichnet, dass**
das Frontpanel (F) konvex geformt ist und/oder das Rückpanel (R) wenigstens teilweise konkav geformt ist.

16. Packung (1) nach Anspruch 15,
**dadurch gekennzeichnet, dass**
das Frontpanel (F) oberhalb der halben Höhe des Packungsgrundkörpers (K) seine maximale konvexe Auswölbung aufweist.

17. Packung (1) nach einem der Ansprüche 1 bis 16,
**dadurch gekennzeichnet, dass**
die beiden vorderen Giebelecken (GV1, GV2) zwei große Giebeleckwinkel (α_{GV1}, α_{GV2}) aufweisen, die jeweils größer sind als 90°.

18. Packung (1) nach einem der Ansprüche 1 bis 17,
**dadurch gekennzeichnet, dass**
die beiden hinteren Giebelecken (GH1, GH2) zwei kleine Giebeleckwinkel (α_{GH1}, α_{GH2}) aufweisen, die jeweils kleiner sind als 90°.

19. Packung (1) nach einem der Ansprüche 1 bis 18,
**dadurch gekennzeichnet, dass**
die vier Giebeleckwinkel (α_{GV1}, α_{GV2}, α_{GH1}, α_{GH2}) eine Winkelsumme aufweisen, die größer ist als 360°.

## Claims

1. Package (1) made of composite material, comprising:
- a package base (B) with two front base corners (BV1, BV2) and with two rear base corners (BH1, BH2),
- a package gable (G) with two front gable corners (GV1, GV2) and with two rear gable corners (GH1, GH2), and
- a package base body (K) with a front panel (F), a first side panel (S1), a second side panel (S2) and a rear panel (R),
- wherein the package base (B) and the package gable (G) are arranged on opposite sides of the package base body (K),
- wherein the composite material has a polymer outer layer, a polymer inner layer and a fibrous support layer, which is arranged between the polymer outer layer and the polymer inner layer, and
- a third sleeve fold line (M3), which has a plurality of sections (II, III), which each adjoin a side panel (S1, S2) and the rear panel (R), and of which at least one section (II, III) is curved,
**characterised in that**
at least one section (I, IV) of the third sleeve fold line (M3) is straight and/or at least two sections (II, III) of the third sleeve fold line (M3) have opposite curvature directions.

2. Package (1) according to claim 1,
**characterised in that**
the third sleeve fold line (M3) ends with one of its two ends at one of the two rear gable corners (GH1, GH2) and ends with its other end at one of the two rear base corners (BH1, BH2).

3. Package (1) according to claim 1 or claim 2,
**characterised in that**
the section (I) of the third sleeve fold line (M3) adjoining the package base (B) and the section (IV) of the third sleeve fold line (M3) adjoining the package gable (G) are straight.

4. Package (1) according to one of the claims 1 to 3,
**characterised in that**
the package base body (K) has at least one stress-relief panel (E1, E2), which is arranged between the front panel (F) and one of the two side panels (S1, S2).

5. Package (1) according to claim 4,
**characterised in that**
the stress-relief panel (E1, E2) and the front panel (F) adjoin the same edge of the package (1), in particular an edge of the package base (B).

6. Package (1) according to claim 4 or claim 5,
**characterised in that**
the stress-relief panel (E1, E2) and one of the two side panels (S1, S2) adjoin the same edge of the package (1), in particular an edge of the package gable (G).

7. Package (1) according to one of the claims 4 to 6,
**characterised in that**
a first sleeve fold line (M1), which is preferably curved at least in sections, is provided between at least one stress-relief panel (E1, E2) and the adjoining front panel (F).

8. Package (1) according to claim 7,
**characterised in that**
the first sleeve fold line (M1) ends only with one of its two ends at one of the two front gable corners (GV1, GV2) or at one of the two front base corners (BV1, BV2) and does not end with its other end at a gable corner (GV1, GV2, GH1, GH2) or at a base corner (BV1, BV2, BH1, BH2).

9. Package (1) according to one of the claims 1 to 8,
**characterised in that**
a second sleeve fold line (M2), which is preferably curved at least in sections, is provided between at least one stress-relief panel (E1, E2) and the adjoining side panel (S1, S2).

10. Package (1) according to claim 9,
**characterised in that**
the second sleeve fold line (M2) ends only with one of its two ends at one of the two front gable corners (GV1, GV2) or at one of the two front base corners (BV1, BV2) and does not end with its other end at a gable corner (GV1, GV2, GH1, GH2) or at a base corner (BV1, BV2, BH1, BH2).

11. Package (1) according to one of the claims 1 to 10,
**characterised in that**
the package (1) has a fin seam (2) in the region of the package gable (G), which is turned over in the direction of the front panel (F).

12. Package (1) according to one of the claims 1 to 11,
**characterised in that**
the package gable (G) is approximately trapezoidal.

13. Package (1) according to one of the claims 1 to 12,
**characterised in that**
the package gable (G) is an oblique gable.

14. Package (1) according to one of the claims 1 to 13,
**characterised in that**
the package gable (G) has a front edge (V), which is curved and which adjoins the front panel (F).

15. Package (1) according to one of the claims 1 to 14,
**characterised in that**
the front panel (F) is convex and/or the rear panel (R) is at least partially concave.

16. Package (1) according to claim 15,
**characterised in that**
the front panel (F) has its maximum convex bulge above half the height of the package base body (K).

17. Package (1) according to one of the claims 1 to 16,
**characterised in that**
the two front gable corners (GV1, GV2) have two large gable corner angles (α_{GV1}, α_{GV2}), which are each greater than 90°.

18. Package (1) according to one of the claims 1 to 17,
**characterised in that**
the two rear gable corners (GH1, GH2) have two small gable corner angles (α_{GH1}, α_{GH2}), which are each smaller than 90°.

19. Package (1) according to one of the claims 1 to 18,
**characterised in that**
the four gable corner angles (α_{GV1}, α_{GV2}, α_{GH1}, α_{GH2}) have an angle sum, which is greater than 360°.

## Revendications

1. Carton (1) constitué d'un matériau composite, comprenant :
- une base de carton (B) dotée de deux coins de base avant (BV1, BV2) et de deux coins de base arrière (BH1, BH2),
- une partie supérieure de carton (G) dotée de deux coins supérieurs avant (GV1, GV2) et de deux coins supérieurs arrière (GH1, GH2), et
- un corps principal de carton (K) doté d'un panneau avant (F), d'un premier panneau latéral (S1), d'un second panneau latéral (S2) et d'un panneau arrière (R),
- la base de carton (B) et la partie supérieure de carton (G) se trouvant à des extrémités opposées du corps principal de carton (K),
- le matériau composite présentant une couche externe de polymère, une couche interne de polymère et une couche de support qui contient des fibres et est disposée entre la couche externe de polymère et la couche interne de polymère, et
- une troisième ligne de pliage de gaine (M3) présentant plusieurs sections (II, III) adjacentes respectivement à un panneau latéral (S1, S2) et au panneau arrière (R) dont au moins une section (II, III) est courbe,
**caractérisé en ce qu'**au moins une section (I, IV) de la troisième ligne de pliage de gaine (M3) est droite et/ou au moins deux sections (II, III) de la troisième ligne de pliage de gaine (M3) présentent des directions de courbure opposées.

2. Carton (1) selon la revendication 1,
**caractérisé en ce que** la troisième ligne de pliage de gaine (M3) se termine avec l'une de ses deux extrémités au niveau de l'un des deux coins supérieurs arrière (GH1, GH2) et avec son autre extrémité au niveau de l'un des deux coins de base arrière (BH1, BH2).

3. Carton (1) selon la revendication 1 ou 2,
**caractérisé en ce que** la section (I) adjacente à la base du carton (B) et la section (IV) adjacente à la partie supérieure de carton (G) de la troisième ligne de pliage de gaine (M3) sont droites.

4. Carton (1) selon l'une des revendications 1 à 3,
**caractérisé en ce que** le corps principal de carton (K) présente au moins un panneau de relâchement des contraintes (E1, E2) agencé entre le panneau avant (F) et l'un des deux panneaux latéraux (S1, S2).

5. Carton (1) selon la revendication 4,
**caractérisé en ce que** le panneau de relâchement des contraintes (E1, E2) et le panneau avant (F) sont adjacents au même bord du carton (1), notamment à un bord de la base du carton (B).

6. Carton (1) selon la revendication 4 ou la revendication 5,
**caractérisé en ce que** le panneau de relâchement des contraintes (E1, E2) et l'un des deux panneaux latéraux (S1, S2) sont adjacents au même bord du carton (1), notamment à une partie supérieure de carton (G).

7. Carton (1) selon l'une des revendications 4 à 6,
**caractérisé en ce que** l'on prévoit une première ligne de pliage de gaine (M1) entre au moins un panneau de relâchement des contraintes (E1, E2) et le panneau avant (F) adjacent à celui-ci qui est de préférence courbe, au moins par sections.

8. Carton (1) selon la revendication 7, **caractérisé en ce que** la première ligne de pliage de gaine (M1) ne se termine qu'avec une de ses deux extrémités au niveau de l'un des deux coins supérieurs avant (GV1, GV2) ou de l'un des deux coins de base avant (BV1, BV2) et ne se termine pas, avec son autre extrémité, au niveau d'un coin supérieur (GV1, GV2, GH1, GH2) ou d'un coin de base (BV1, BV2, BH1, BH2).

9. Carton (1) selon l'une des revendications 1 à 8,
**caractérisé en ce que** l'on prévoit une deuxième ligne de pliage de gaine (M2) entre au moins un panneau de relâchement des contraintes (E1, E2) et le panneau latéral (S1, S2) adjacent à celui-ci, qui est de préférence courbe, au moins par sections.

10. Carton (1) selon la revendication 9,
**caractérisé en ce que** la deuxième ligne de pliage de gaine (M2) ne se termine qu'avec une de ses deux extrémités au niveau de l'un des deux coins supérieurs avant (GV1, GV2) ou de l'un des deux coins de base avant (BV1, BV2) et ne se termine pas, avec son autre extrémité, au niveau d'un coin supérieur (GV1, GV2, GH1, GH2) ou d'un coin de base (BV1, BV2, BH1, BH2).

11. Carton (1) selon l'une des revendications 1 à 10,
**caractérisé en ce que** le carton (1) présente au niveau de la partie supérieure de carton (G) une jonction en éventail (2) qui est rabattue en direction du panneau avant (F).

12. Carton (1) selon l'une des revendications 1 à 11,
**caractérisé en ce que** la partie supérieure de carton (G) est approximativement trapézoïdale.

13. Carton (1) selon l'une des revendications 1 à 12, **caractérisé en ce que** la partie supérieure de carton (G) est une partie supérieure oblique.

14. Carton (1) selon l'une des revendications 1 à 13,
**caractérisé en ce que** la partie supérieure de carton (G) comporte un bord avant (V) adjacent au panneau avant (F) qui est courbe.

15. Carton (1) selon l'une des revendications 1 à 14,
**caractérisé en ce que** le panneau avant (F) est de forme convexe et/ou le panneau arrière (R) est au moins partiellement de forme concave.

16. Carton (1) selon la revendication 15,
**caractérisé en ce que** le panneau avant (F) présente sa convexité maximale au-dessus de la moitié de la hauteur du corps principal de carton (K).

17. Carton (1) selon l'une des revendications 1 à 16,
**caractérisé en ce que** les deux coins supérieurs avant (GV1, GV2) présentent deux grands angles de coins supérieurs (α_{GV1}, α_{GV2}) qui sont chacun supérieur à 90°.

18. Carton (1) selon l'une des revendications 1 à 17,
**caractérisé en ce que** les deux coins supérieurs arrière (GH1, GH2) présentent deux petits angles de coins supérieurs (α_{GH1}, α_{GH2}) qui sont chacun inférieurs à 90°.

19. Carton (1) selon l'une des revendications 1 à 18,
**caractérisé en ce que** les quatre angles des coins supérieurs (α_{GV1}, α_{GV2}, α_{GH1}, α_{GH2}) présentent une somme des angles supérieure à 360°.
